# EUROPEAN PATENT APPLICATION

(11) **EP 0 965 914 A2**
(43) Date of publication of application: **22.12.1999**
(21) Application number: 99303350.5
(22) Date of filing: 29.04.1999
(51) Int. Cl.: G06F 9/44

(54) **Method and apparatus for implementing a tag-based display language utilizing a procedural instruction language**

(30) Priority: 30.04.1998 US 71326
(71) Applicant: Phone.Com, Inc., Redwood City, CA 94063 (US)
(72) Inventor: Martin, Bruce K., Jr., Palo Alto, CA 94306 (US)
(74) Representative: Ablett, Graham Keith

(57) **Abstract**

The present invention relates to a method for displaying markup language documents on a first computer system. A client computer (260) has a general purpose computer program execution environment and receives programs for execution in the environment so as to generate a display on an output device and receive input from an input device. A translation computer system (210), on retrieving a markup language document from a storage device (280) in response to a request from the client computer, systematically parses the document to generate a corresponding computer program embodying the content and semantics of the document and then transmits the generated computer program to the client computer to enable display of the markup language document.

## Description

### Field of the Invention

This invention relates to the computer display of tag-based markup language documents without requiring a dedicated browser or reader.

### Background to the Invention

A widely used way of displaying information on computer display devices is through the use of tag-based markup languages such as Hyper-Text Markup Language (HTML), Handheld Device Markup Language (HDML), and Standard Generalized Markup Language (SGML). These languages primarily provide for the display of information and mechanisms for selecting further information for display. SGML, for example, is a standard computer language for describing the structure and characteristics of documents, and which automates the formatting and display of information according to its structure. HTML, which can be considered an application of SGML, forms the basis for the World Wide Web (WWW) and allows the description of the structure and presentation of Web pages and the ways in which it is possible to access one from another. In these languages portions of the information are tagged with various attributes indicating, for example, a display or interactive characteristic.

Tag-based display and markup languages such as HTML and SGML are typically parsed, interpreted and displayed using a dedicated software engine called a browser or reader. The browser is a software application which is dedicated to the task of displaying and operating with the tag-based document represented in the markup language, and may display the document on any of a wide variety of media, including a computer display, printed paper, and the like.

A typical reader or browser of a markup language in operation first requests the markup language data (e.g. a document) from a data source. The data, and sometimes the data source, are generally identified or at least selected by the user. The document is retrieved by the data source, such a disk or network server, and passed to the browser application. The browser then interprets the markup language of the document, and displays the data included therein according to the specified format. A document in an Internet markup language such as HTML may include links to other documents which can be interactively selected by the user. When the user selects another document, the browser then issues a request for the data for that document, and the process is repeated. Using the HTML language, for example, the browser may operate on a different computer than that which holds the documents. In this case networking communication technology is used to pass the request from the browser to the storage computer and to pass the data of the document back to the browser. Furthermore, the links found in a first document may reference documents which are held on different computers in different locations.

Web browsers, for example, can be quite complex software applications, and sometimes more than one browser program may be required, such as where it is desired to access documents in several different forms of markup languages. For example, separate Web browser and document viewer programs may be required to access HTML Web pages and SGML documents, respectively. This can be particularly disadvantageous when tag-based markup language documents are desired to be accessed using computing equipment which is limited in resources. For example, accessing tag-based documents in a thin-client environment with limited processor and memory resources may not be possible since a full browser program cannot be implemented.

### Summary of the Invention

The present invention provides a system in which a variety of different tag-based markup language documents can be utilized by computing equipment of limited resources by compiling the markup language documents into a common executable computer program form. A translation system in accordance with the present invention can function in a computer system having a processor operating under control of a general purpose computer program execution environment for executing computer programs, receiving input from an input device and displaying output on an output device, and a storage device storing a plurality of tag-based markup language documents and coupled to receive requests from the processor. The translation system is coupled to the processor and the storage device and arranged to receive a tag-based markup language document from the storage device in response to a request for the document by the processor. The translation system is adapted to systematically parse the document and generate a corresponding computer program embodying the content and tag-based semantics of the document. The translation system transmits the generated computer program to a client computer system. The client computer system is then able to execute the generated computer program in a general purpose computer program execution environment so as to generate a display on the output device and permit input to be received from the input device.

A method according to the invention for displaying tag-based markup language documents on a computer system, comprises retrieving a tag-based markup language document from a document repository, generating a computer program from the document embodying the content and tag-based semantics of the document, the computer program being executable in general purpose program execution environment. The generated computer program is then executed so as to display the content of the document according to the programmed semantics corresponding to the document tags.

### Brief Description of the Drawings

The invention is described in greater detail below, by way of example only, with reference to a preferred embodiment thereof and the accompanying drawings, wherein:
Figure 1 is a block diagram of a conventional tag-based markup language document viewing and interaction system; and
Figure 2 is a functional block diagram of a system for displaying and interacting with tag-based documents according to a preferred embodiment of the present invention.

### Detailed Description of the Preferred Embodiment

Tag-based markup languages, such as the Hyper-Text Markup Language (HTML) or Handheld Device Markup Language (HDML), are used to define documents by utilizing a set of elements that define the document and guide manner in which it is displayed to the user. An element is a fundamental component of the structure of a text document. Some examples of elements are heads, tables, paragraphs, and lists. In order to display a document in such a tag-based markup language, the user s computer requires a software application such as a browser to read and interpret the markup language tags which mark the elements of a file, and display the document elements based on the markup language tags. The browser software application is typically dedicated to the task of displaying markup language tag-based documents, and more than one browser program may be required if a user wishes to view documents in different markup language tag-based languages.

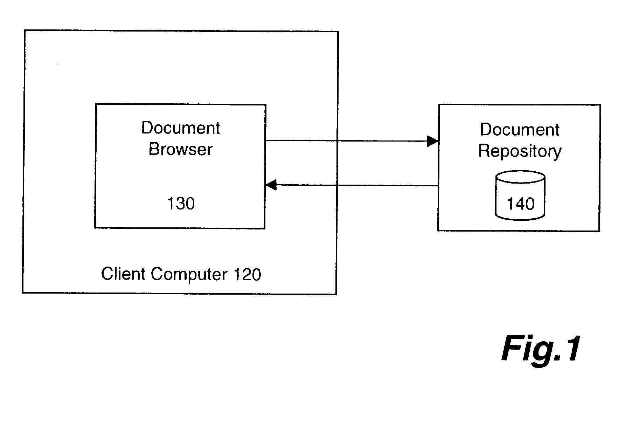

Figure 1 illustrates a block diagram of a computer system adapted to operate with documents in a tag-based markup language according to known procedures. A typical document browser 130 or reader program for markup languages may operate on a user s client computer 120 such as a handheld device, a PC (personal computer) or PDA (personal digital assistant). The client computer 120 is coupled to communicate with a document repository 140 in the form of a storage device or the like on which a number of markup language documents are held for access by the client computer 120. The document repository may in fact be an element of the user s client computer 120, such as a hard-disk. Alternatively, the document repository may reside on a separate computer system with which the client computer 120 is able to communicate. For example, the document repository may be on a computer server which forms part of an intranet or the Internet with which the client computer 120 communicates through a network connection using, for example, the Hyper-Text Transport Protocol (HTTP).

In order to obtain a document from the document repository 140, the client computer 120 makes a request (e.g. using HTTP) to the document repository 40 identifying the document which is required. The document repository 140, then fetches the document data from storage, or generates it from data which is known to the document repository, according to the user s request. The data making up the document is then communicated to the browser running on the client computer 120. The document is typically transmitted in the form of textual code data defining the tags and elements making up the document. The document browser interprets the elements and attributes defined in the document and displays the document content to the user accordingly. The user may read or observe the document and, for example, request another named document based on the contents of the current document. In the case of HTML, the document may contain embedded links to other documents so that the user can easily select another document.

An alternative approach which is addressed by the present invention removes the need for a dedicated document browser for viewing tag-based markup language documents. Instead of the procedure outlined above, the tag-based language data (e.g. HTML, HDML, etc.) defining the document is translated into a operational computer program. The computer program embodies the content and semantics of the original document, only in a form which is executable on a general purpose computer. Thus, the browser functionality is replaced by a general purpose computer program language execution environment, and a translation system in which the tag-based markup language data is converted into computer programs. One of the advantages of this system is that the translation system can be implemented on a network server, for example, whilst the program execution environment on the user s computer need not be dedicated to document viewing.

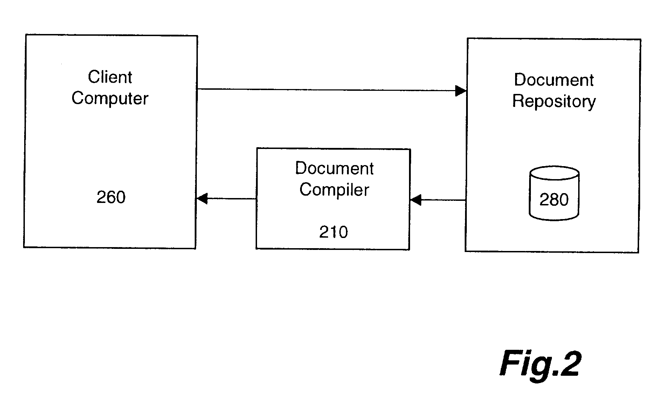

Figure 2 illustrates a computer system which is adapted to implement a document access system according to an embodiment of the present invention. The user s client computer 260 in this case does not operate a browser or reader application, but instead implements a computer program execution environment, such as a Java virtual machine or the like. The user s client computer 260 is coupled to communicate with the document repository 280 which stores a number of tag-based markup language documents for access by the user s computer, and perhaps by other computers as well in the case of a network server. A document compiler 210 is also provided, interposed in the communication path between the document repository 280 and the program execution environment of the user s client computer 260. The document compiler 210 can be an element of the document repository system, such as a part of the same network server. Alternatively the document compiler 210 may bean element of the user s client computer 260, for example a computer process executing on the same hardware as the program execution environment, such as when the document repository also resides on the same hardware system in the form of a disk or the like. In another embodiment, however, the document compiler 210 can be separate from both the client computer 260 and the document repository 280.

In a similar manner to the conventional document access system described above, the client computer 260 in operation requests a named document from the document repository. This may be done by way of a HTTP request, for example. The document repository 280 responds to the request from the user by fetching the named document from storage or generating the document from data which is known to the document repository. The named document, in the form of textual coded tag-based markup language, is returned from the document repository and sent to, or intercepted by, the document compiler 210. The document compiler 210 converts the static markup language document into an executable computer program which embodies the content and structure of the original document. The structure of the computer program and the executable code which it comprises may be in any desired form, however it is preferred that the computer program be architecture neutral for greater usability by a range of different types of computers which may be employed by the user. For example, computer programs in the Smalltalk or Java execution environments are particularly preferred.

The document compiler 210 performs a translation function by systematically obtaining portions of the original markup language document and generating executable instructions to perform operations to display and interact with the data in a manner equivalent to that defined by the markup language document. For example, if the document compiler is arranged to compile documents into Java programs, a library of Java sub-routines may be accessible to the compiler 210 which implement the tag-based functions specified in the document. The compiler would then build up a computer program from those subroutines and the content data from the original document, and generate a final program in architecture neutral Java byte codes to enable execution on any Java virtual machine execution environment on the user s computer regardless of computer type. The executable computer may include routines to sense and receive user input, such as by way of a pointer device or the like, and interfaces with the client computer 260 to enable requests for other documents to be communicated to the document repository upon a user specified input of that nature.

Once the general purpose, and preferably architecture neutral, computer program has been completed by the document compiler 210, it is transmitted to the user client computer 260 and executed in the general purpose program execution environment. This causes the various routines comprising the program to be executed to thereby present output to be displayed to the user corresponding to that originally specified by the tag-based markup language data, and input to be supplied by the user to select further documents.

In one embodiment of the present invention, the user s client computer 260 may implement a Java virtual machine that is capable of executing Java byte code programs and interfacing with the computer peripherals for displaying output, receiving input communicating requests for documents and receiving programs for execution. The document compiler 210 is in the form of a software application installed on a network server with which the client computer 260 communicates. The document compiler 210 accepts input tag-based markup language document data in any one of a number of languages such as SGML, HTML, HDML, etc., and converts those received documents into corresponding standalone programs in Java code. All of the textual information for a document is stored as data contained within the corresponding program. All tags which indicate the semantics of the information (e.g. "use a bold font") are translated into a series of commands which, when executed, cause the textual information to display correctly. All tags which indicate possible interactions with the user (e.g. HTML "link") are converted into small subprograms which query the user for input, and then perform the indicated command. For example, in the case of a link, interface with the communications system to request and receive another document/program.

In the following example the HTML page defined below specifies a document that contains textual information (with bold highlighting), and a link allowing the user to selectively request another document. 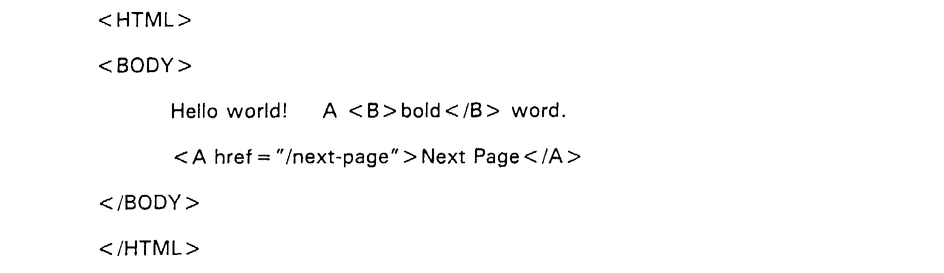 This document would be translated into a short executable computer program which can be represented by the following pseudo-code.

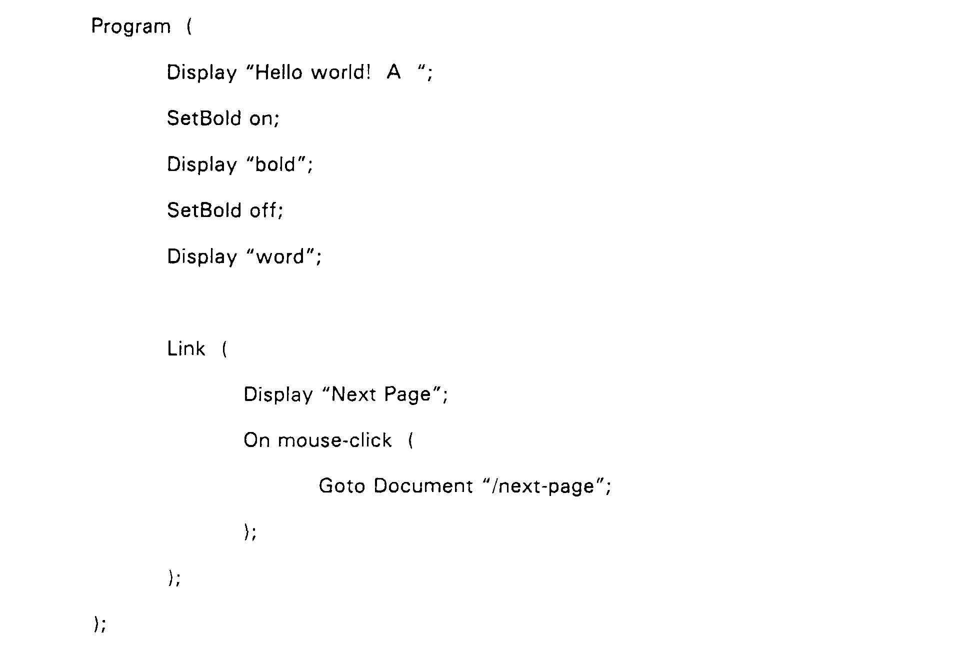

The system of the present invention provides a number of advantages over known tag-based markup language document display systems, particularly for certain types of computers. A full document browser or reader is not required on the user s computer, and moreover, different browsers or readers are not needed for viewing of documents originally coded in different markup languages. Instead, if documents in different markup languages are required by the user, the document compiler itself can be extended to translate from those various languages to a single executable program code type, so that the user s computer only needs one general purpose program execution environment. Since the document compiler may be operated on a network server, for example, the processing power and memory required for the translation may be readily available, and the same compiler can be utilized by numerous end-users. Thus, the resources required of the user s computer are greatly reduced, particularly where the display of complex or varied documents is involved. This can be important in cases where the user s computer has limited and/or non-expandable resources, such as handheld computers, PDAs and other devices, or network computers (NCs).

The foregoing detailed description of the invention and the preferred embodiments thereof has been presented by way of example only, and is not intended to be considered limiting to the invention which is defined in the claims appended hereto. In particular, many modifications and variations to the described systems and arrangements which have been described will be readily apparent to those of ordinary skill in the art, and such modifications and variations are considered to remain within the scope of the invention.

## Claims

1. A method for displaying markup language documents on a first computer system, said method comprising:-
retrieving a markup language document from a document repository;
generating a computer program from said markup language document embodying the content and semantics of said markup language document, said computer program being executable in general purpose program execution environment; and
executing said computer program so as to display the content of said document according to the programmed semantics corresponding to the document tags.

2. A method as claimed in claim 1, wherein said retrieving the markup language document and said generating said computer program are performed on a second computer which is separate from said first computer used to execute the computer program.

3. A method as claimed in claim 2, wherein said first computer and said second computer form part of a computer network.

4. A method as claimed in any preceding claim, wherein said computer program is generated in the form of an architecture neutral coded program.

5. A method as claimed in claim 4, wherein said computer program is a Java byte code program.

6. A method as claimed in any preceding claim further comprising:- receiving input from a user in response to the execution of said computer program representing said document content.

7. A method as claimed in claim 6 further comprising:-
requesting a second markup language document on the basis of the input from the user;
retrieving said second markup language document;
generating a second computer program from said second markup language document; and
executing said second computer program to display said second markup language document.

8. A computer system for displaying markup language documents, said computer system comprising:-
a client computer, said client computer including a general purpose computer program execution environment, said client computer receiving programs for execution in said general purpose computer program execution environment so as to generate a display on an output device and receive input from an input device;
a storage device storing a plurality of tag-based markup language documents;
a translation computer system, said translation computer system receiving requests from said client computer; and
a translation system on said translation computer system, said translation system retrieving a markup language document from said storage device in response to a request from said client computer, said translation system systematically parsing the document to generate a corresponding computer program embodying the content and semantics of the document, said translation system transmitting said generated computer program to said client computer to enable said client computer to display said markup language document.

9. A computer system as claimed in claim 8, wherein said translation computer comprises a network server.

10. A computer system as claimed in claim 8 or 9, wherein the computer program generated by said translation system is an architecture neutral coded program.

11. A computer system as claimed in claim 10, wherein the computer program generated by said translation system is a Java byte code program.

12. A system containing program code for displaying markup language documents on a first computer system, said system comprising:-
first program code for retrieving a markup language document from a document repository;
second program code for generating a computer program from said markup language document embodying the content and semantics of said markup language document, said computer program being executable in general purpose program execution environment; and
third program code for executing said computer program so as to display the content of said document according to the programmed semantics corresponding to the document tags.
